# FASCICULE DE BREVET EUROPEEN

(11) **EP 1 377 502 B1**
(45) Date de publication et mention de la délivrance du brevet: **05.08.2009**
(21) Numéro de dépôt: 02701376.2
(22) Date de dépôt: 01.02.2002
(51) Int. Cl.: B64D 11/00, B64D 13/00, A62B 7/14

(54) **PROCEDE DE DISTRIBUTION D'AIR ENRICHI EN OXYGENE AUX PASSAGERS D'UN AERONEF**
VERFAHREN ZUR VERSORGUNG VON SAUERSTOFF-BEREICHERTER LUFT FÜR DIE PASSAGIERE EINES LUFTFAHRZEUGES
METHOD FOR DISTRIBUTING OXYGEN-ENRICHED AIR TO AIRCRAFT PASSENGERS

(30) Priorité: 04.04.2001 FR 0104569
(43) Date de publication de la demande: 07.01.2004
(73) Titulaire: L'AIR LIQUIDE, Société Anonyme pour l'Etude et l'Exploitation des Procédés Georges Claude, 75007 Paris (FR)
(72) Inventeur: CAZENAVE, Jean-Michel, F-38180 Seyssins (FR); DEHAYES, Jean, F-38660 Lumbin (FR); VANDROUX, Olivier, 38100 Grenoble (FR); ZAPATA, Richard, 38180 Seyssins (FR)
(74) Mandataire: Le Moenner, Gabriel
(86) Numéro de dépôt international: PCT/FR2002/000389
(87) Numéro de publication internationale: WO 2002/081306

(56) Documents cités:
- EP-A- 0 129 304
- EP-A- 0 364 283
- EP-A- 0 391 607
- EP-A- 0 827 907
- WO-A-02/04076
- FR-A- 2 768 633
- US-A- 3 045 691
- US-A- 4 651 728
- US-A- 4 960 119

## Description

La présente invention concerne un procédé de distribution d'air enrichi en oxygène aux passagers d'un aéronef, plus particulièrement d'un avion de ligne commerciale.

Lors d'une dépressurisation accidentelle de la cabine d'un avion, survenant en haute altitude, les occupants (passagers et équipage) doivent rapidement inhaler un air enrichi en oxygène, afin d'éviter un état d'hypoxie, dû à la diminution brutale de la pression partielle d'oxygène.

A cet effet, il est connu de prévoir des moyens indépendants, permettant de fournir un air enrichi en oxygène. Il peut s'agir de bouteilles à haute pression, dans lesquelles est stocké de l'oxygène pur. A titre d'alternative, ce dernier peut être produit par l'intermédiaire de générateurs chimiques d'oxygène.

La distribution de l'oxygène aux passagers, depuis les moyens de fourniture, intervient par l'intermédiaire de masques. Ces derniers permettent un mélange entre l'oxygène distribué et l'air ambiant. Cette distribution est stoppée lorsque l'aéronef rejoint une altitude basse d'environ 3 000 mètres, qui est atteinte à peu près en 15 minutes à partir d'une altitude de croisière d'environ 12 500 mètres.

Cette solution connue implique cependant certains inconvénients. En particulier, étant donné que, en cas de dépressurisation, l'aéronef doit nécessairement rejoindre une altitude relativement basse, voisine de 3 000 mètres, il est indispensable d'emmener dans les réservoirs une quantité de carburant supplémentaire. En effet, la consommation de l'aéronef est augmentée à cette altitude basse, du fait de la plus grande résistance de l'air. On conçoit aisément que l'emport de ce carburant supplémentaire contribue à alourdir l'appareil, de manière significative.

US-A-4 651 728 (Boeing) décrit un système multisources de fourniture d'oxygène à un pilote d'avion de chasse à siège éjectable.

EP-A-827 907 (Airbus), qui constitue l'état de la technique le plus proche, décrit un procédé de distribution d'air enrichi par moyen d'une source indépendante d'oxygène et d'un concentrateur embarqué d'air enrichi en oxygène alimentant divers circuits aval, pour équipage et passagers.

WO-A-02/04076 (HNG), publié le 17 janvier 2002, décrit une batterie de séparateurs fournissant de l'oxygène à des masques de passagers et d'équipage, éventuellement complétés de petits réservoirs d'oxygène.

L'invention se propose de mettre en oeuvre un procédé de distribution d'air enrichi en oxygène, permettant de pallier les inconvénients de la solution connue mentionnée plus haut.

A cet effet, elle a pour objet un procédé de distribution d'air enrichi en oxygène aux passagers d'un aéronef selon la revendication 1.

L'invention permet de réaliser les objectifs précédemment mentionnés.

En effet, selon l'invention, le séparateur embarqué peut produire de l'air enrichi en oxygène, à partir d'une source d'air comprimé propre à l'aéronef, pendant une durée très importante. Les passagers sont ainsi à même d'être alimentés en air enrichi en oxygène, non seulement pendant le temps de la descente, mais également durant le vol de déroutement lui-même.

On conçoit donc aisément que l'altitude de déroutement peut, de ce fait, être notablement supérieure à celle adoptée dans l'art antérieur. Grâce au procédé de l'invention, il est ainsi possible de prévoir des vols de déroutement se situant à des altitudes supérieures à 5 500 mètres, avantageusement comprises entre 6 000 et 8 000 mètres, permettant de franchir la plupart des massifs montagneux du globe. A titre de comparaison, avec le procédé mettant en oeuvre la solution de l'art antérieur, une telle altitude de déroutement nécessiterait des moyens de fourniture, tels que des bouteilles ou des générateurs, dont l'encombrement et la masse serraient inacceptables.

De plus, la quantité de carburant de sûreté, qu'il convient de prévoir dans les réservoirs de l'aéronef, s'en trouve sensiblement réduite grâce à l'invention. En effet, l'altitude de déroutement autorisée par l'invention induit une diminution notable de la consommation de carburant par rapport à l'art antérieur, qui nécessite d'atteindre une altitude beaucoup plus basse. La réduction de cette quantité supplémentaire de carburant assure donc une diminution correspondante du poids de l'aéronef, ainsi que de sa consommation. Par ailleurs, cette réduction du volume de carburant embarqué autorise l'admission d'occupants ou de bagages supplémentaires, ce qui est avantageux en termes économiques.

Etant donné que l'invention autorise des altitudes de déroutement élevées, celle permet, comme sus-mentionné, aux compagnies aériennes d'envisager de nouveaux trajets, survolant des régions montagneuses. Une telle possibilité est avantageuse, dans la mesure où elle est à même d'induire une réduction de la durée des vols. Il convient de rappeler que les trajets, auxquels il est fait allusion ci-dessus, sont jusqu'à présent interdits, lorsqu'ils se situent au-dessus de zones dont l'altitude est supérieure à l'altitude de déroutement autorisée dans cet art antérieur.

Enfin, l'invention permet de s'affranchir de tout emport massif de bouteilles d'oxygène gazeux ou de générateurs d'oxygène embarqué surdimensionnés. Ceci garantit une diminution du poids de l'appareil, et réduit considérablement les risques d'explosion, lors d'incendies à bord.

Le procédé selon l'invention peut utiliser une installation d'air enrichi en oxygène aux passagers d'un aéronef selon les revendications 9 à 13.

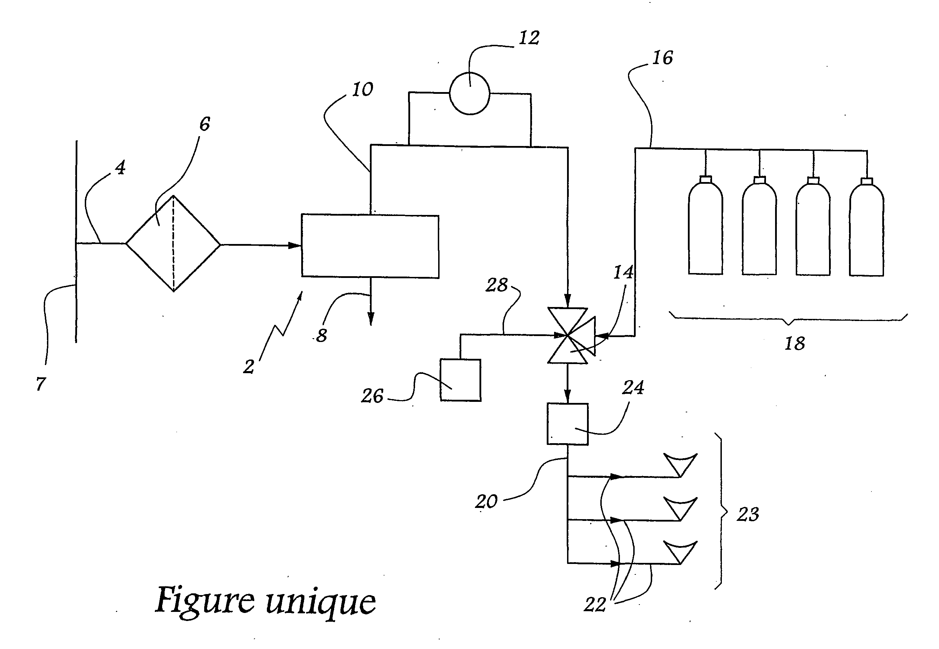

L'invention va être décrite ci-dessous, en référence à la figure unique annexée, donnée uniquement à titre d'exemple non limitatif, cette figure étant une vue schématique illustrant un mode de réalisation d'une installation de distribution d'air enrichi en oxygène conforme à l'invention.

L'installation de distribution, représentée sur cette figure, comprend un séparateur ou concentrateur d'oxygène de type connu, désigné dans son ensemble par la référence 2. Ce concentrateur, qui permet une séparation de l'oxygène et de l'azote contenus dans l'air fait appel typiquement à des tamis moléculaires, notamment des zéolites, de type connu en soi. Ce concentrateur fournit en sortie un air enrichi en oxygène à une teneur en oxygène avantageusement enture 60 et 95 %, typiquement entre 80 et 93 %, à une faible pression comprise typiquement entre 1,5 et 2,5 bars relatifs.

Ce concentrateur 2 est mis en relation, par une ligne 4, pourvue d'un filtre 6, avec une source d'air comprimé 7, interne à un avion. Une telle source est par exemple formée par le circuit de conditionnement de l'aéronef, ou bien encore par un prélèvement sur les étages compresseurs des réacteurs.

Le concentrateur 2 comprend une conduite de sortie 8, à l'intérieur de laquelle circule de l'air enrichi en azote, ainsi qu'une ligne 10, à l'intérieur de laquelle circule de l'air enrichi en oxygène. Cette ligne 10 est munie d'un capteur 12, permettant de contrôler la teneur en oxygène de l'air enrichi qui y circule.

Dans le mode de réalisation représenté, la ligne 10 débouché dans une vanne trois voies 14, mise par ailleurs en communication, via une conduite 16, avec une batterie de bouteilles de gaz 18. Ces dernières assurent, de façon classique, un stockage d'oxygène pur sous une haute pression supérieure à 110 bars relatifs, typiquement entre 120 et 150 bars. Elles peuvent être complétées le cas échéant, par des générateurs chimiques d'oxygène, non représentés, eux aussi de type connu. La conduite 16 comporte au moins un régulateur/détendeur (non représenté) pour fournir à la ligne 20 de l'oxygène sous une pression réduite, inférieure à 3 bars relatifs.

La sortie de la vanne trois voies 14 est constituée par une ligne distributrice 20, courant le long de la cabine de l'avion et qui se divise selon plusieurs dérivations 22, dont chacune est apte à alimenter un masque à oxygène 23 pour un passager. Cette ligne 20 est équipée d'un régulateur de pression 24, qui permet de répartir équitablement la quantité d'air distribuée dans l'ensemble des dérivations 22.

Enfin, il est prévu un capteur d'altitude 26, coopérant avec un moyen d'actionnement non représenté, permettant de commander la vanne 14, via la ligne 28. A titre de variante, ce capteur d'altitude peut être remplacé ou doublé par un capteur de pression.

Le fonctionnement de l'installation, décrite ci-dessus, va être explicité dans ce qui suit.

En altitude de croisière, par exemple voisine de 12 500 mètres, la ligne 20 n'est pas alimentée, ni par le concentrateur 2, au repos, ni par les bouteilles 18.

Lors d'un accident de dépressurisation, un signal est envoyé de façon classique au pilote. Ce dernier initie alors l'ouverture immédiate des bouteilles 18, de façon à alimenter la ligne 20 en air enrichi, à partir de la conduite 16 et via la vanne trois voies 14. Ceci garantit la distribution immédiate aux passagers d'une première fraction d'air riche en oxygène, par l'intermédiaire des dérivations 22, terminées par les masques à oxygène 23.

Par ailleurs, le pilote met simultanément en marche le concentrateur d'oxygène 2, qui nécessite un temps de mise en route de quelques minutes. Etant donné que, pendant cette mise en route, la vanne trois voies est mise en communication uniquement avec la conduite 16, et non pas avec la ligne 10, il est nécessaire de prévoir une sortie d'évacuation de l'air produit initialement par le concentrateur. Une telle évacuation (non représentée sur la Figure) peut être située dans la vanne trois voies 14, ou bien, en amont de celle-ci, sur la ligne d'alimentation 10.

Lorsque l'altitude intermédiaire de déroutement prévue est atteinte, typiquement au-dessus de 5 000 mètres, avantageusement entre 6 000 à 8 000 mètres, le capteur 26 provoque le basculement de la vanne trois voies 14, qui met alors en communication la ligne 20 avec le concentrateur 2, via la ligne 10. De la sorte, les masques reçoivent, via la ligne d'alimentation 20 et sa dérivation 22, une seconde fraction d'air enrichi en oxygène, fournie par le concentrateur 2.

La seconde fraction d'air a une teneur élevée en oxygène, entre 60 et 95%, avantageusement entre 80 et 93 %. Cet air enrichi en oxygène est dilué avec l'air ambiant au niveau du masque 23, lors de l'inspiration par les occupants, pour restituer des teneurs en oxygène convenables selon l'altitude du vol de déroutement (entre 26 % pour une altitude de 5 500 mètres et 40 % pour une altitude de 8 000 mètres), ce qui évite de devoir fournir des débits importants en sortie du concentrateur.

Une fois les masques à oxygène 23 alimentés par le concentrateur, le vol est susceptible de se poursuivre à l'altitude de déroutement précédemment choisie pendant une durée limitée seulement par l'autonomie en kérosène de l'avion.

## Revendications

1. Procédé de distribution d'air enrichi en oxygène aux passagers d'un aéronef, dans lequel on fournit aux passagers une première fraction d'air enrichi en oxygène à partir d'une source indépendante d'oxygène à une première pression, pendant une phase de descente de l'aéronef entre une altitude de croisière et une altitude de déroutement, et on produit, dans un séparateur embarqué, une seconde fraction d'air enrichi en oxygène à une teneur comprise entre 60 et 95% et à une deuxième pression, qu'on délivre aux passagers, au moins lors d'une phase de vol sensiblement stabilisée de l'aéronef, se déroulant au voisinage de l'altitude de déroutement, dans lequel, durant ladite phase de descente, on fournit uniquement la première fraction d'air enrichi et durant la phase de vol sensiblement stabilisé, on fournit uniquement la seconde fraction d'air enrichi.

2. Procédé selon la revendication 1, **caractérisé en ce que** ladite deuxième pression est inférieure à ladite première pression.

3. Procédé selon la revendication 1 ou 2, **caractérisé en ce que** l'altitude de déroutement est supérieure à 5 500 mètres.

4. Procédé selon l'une des revendications 1 à 3, **caractérisé en ce que** l'altitude de déroutement est comprise entre 6 000 et 8 000 mètres.

5. Procédé selon l'une des revendications 1 à 4, **caractérisé en ce que** la deuxième pression est comprise entre 1,5 et 2,5 bars relatifs.

6. Procédé selon la revendication 5, **caractérisé en ce qu'**on produit ladite seconde fraction d'air enrichi dans un concentrateur à tamis moléculaires (2).

7. Procédé selon l'une des revendications 1 à 6, **caractérisé en ce que** la première pression est supérieure à 110 bars relatifs.

8. Procédé selon l'une des revendications précédentes, **caractérisé en ce que**, lors de la phase de vol à l'altitude de déroutement, on ne fournit sensiblement plus la première fraction d'air enrichi aux passagers.

9. Procédé selon l'une quelconque des revendications 1 à 8, **caractérisé en ce qu'**il utilise une installation de distribution d'air enrichi en oxygène aux passagers d'un aéronef, comprenant une source indépendante (18) d'une première fraction d'air enrichi en oxygène à une première pression, des moyens embarqués de production (2) d'une seconde fraction d'air enrichi en oxygène à une deuxième pression, des moyens de délivrance (20, 22, 23) des première et seconde fractions d'air enrichi en oxygène aux passagers, et des moyens de distribution séquentielle (14) des débits respectifs des première et seconde fractions d'air enrichi en oxygène, aux moyens de délivrance (20, 22, 23), ces moyens de distribution comprenant une première entrée reliée à la source indépendante (18), une deuxième entrée reliée aux moyens de production (2), une sortie reliée aux moyens de délivrance (20-23), et une vanne trois voies (14), l'installation comprenant des moyens, sensibles à la pression, de commande (26) des moyens de distribution (14) lesdits moyens de commande comportant un capteur d'altitude (26) et/ou un capteur de pression coopérant avec un moyen d'actionnement conformé pour commander la vanne (14) pour fournir, dans un premier temps, uniquement la première fraction d'air enrichi durant une phase de descente entre une altitude de croisière et une altitude de déroutement, puis pour fournir, dans un deuxième temps, uniquement la seconde fraction d'air enrichi durant une phase de vol sensiblement stabilisée au voisinage de l'altitude de déroutement.

10. Procédé selon la revendication 9,
**caractérisé en ce que** l'installation comprend un détendeur de pression entre la source indépendante (18) et les moyens de distribution (14).

11. Procédé selon l'une des revendications 9 à 10, **caractérisé en ce que** les moyens de production comprennent un concentrateur à tamis moléculaires (2).

12. Procédé selon l'une des revendications 9 à 11, **caractérisé en ce que** la source indépendante comprend des bouteilles d'oxygène sous pression (18).

13. Procédé selon l'une des revendications 9 à 12, **caractérisé en ce que** l'installation comprend un régulateur de pression (24) entre les moyens de distribution (14) et les moyens de délivrance (20, 23).

## Claims

1. Method for distributing oxygen-enriched air to aircraft passengers, in which a first fraction of oxygen-enriched air is delivered to the passengers from an independent oxygen source at a first pressure, during a descent phase of the aircraft between a cruising altitude and a diversion altitude, and a second fraction of oxygen-enriched air with an oxygen content of between 60 and 95% and at a second pressure, which is delivered to the passengers at least during an approximately stable flight phase of the aircraft, starting close to the diversion altitude, is produced in an onboard separator, and in which the first enriched air fraction is delivered only during said descent phase and the second enriched air fraction is delivered only during the substantially stable flight phase.

2. Method according to Claim 1, **characterized in that** said second pressure is lower than said first pressure.

3. Method according to Claim 1 or 2, **characterized in that** the diversion altitude is above 5500 meters.

4. Method according to one of Claims 1 to 3, **characterized in that** the diversion altitude is between 6000 and 8000 meters.

5. Method according to one of Claims 1 to 4, **characterized in that** the second pressure is between 1.5 and 2.5 bar relative.

6. Method according to Claim 5, **characterized in that** said second enriched air fraction is produced in a concentrator (2) provided with molecular sieves.

7. Method according to one of Claims 1 to 6, **characterized in that** the first pressure is above 110 bar relative.

8. Method according to one of the preceding claims, **characterized in that,** during the flight phase at the diversion altitude, the first enriched air fraction is practically no longer delivered to the passengers.

9. Method according to any one of Claims 1 to 8, **characterized in that** it employs an installation for delivering oxygen-enriched air to aircraft passengers, comprising an independent source (18) of a first oxygen-enriched air fraction at a first pressure, onboard means (2) for producing a second oxygen-enriched air fraction at a second pressure, means (20, 22, 23) for delivering the first and second oxygen-enriched air fractions to the passengers and means (14) for sequentially distributing respective flows of the first and second oxygen-enriched air fractions to the delivery means (20, 22, 23), these distribution means comprising a first inlet connected to the independent source (18), a second inlet connected to the production means (2), an outlet connected to the delivery means (20-23), and a three-way valve (14), the installation including means (26), sensitive to the pressure, for controlling the distribution means (14), said control means comprising an altitude sensor (26) and/or a pressure sensor cooperating with an actuating means designed to operate the valve (14) so as to deliver, in a first step, only the first enriched air fraction during a descent phase between a cruising altitude and a diversion altitude and then to deliver, in a second step, only the second enriched air fraction during an approximately stable flight phase close to the diversion altitude.

10. Method according to Claim 9, **characterized in that** the installation comprises a pressure-reducing valve between the independent source (18) and the distribution means (14).

11. Method according to either of Claims 9 and 10, **characterized in that** the production means comprise a concentrator (2) provided with molecular sieves.

12. Method according to one of Claims 9 to 11, **characterized in that** the independent source comprises pressurized oxygen bottles (18).

13. Method according to one of Claims 9 to 12, **characterized in that** the installation includes a pressure regulator (24) between the distribution means (14) and the delivery means (20, 23).

## Patentansprüche

1. Verfahren zur Abgabe von mit Sauerstoff angereicherter Luft an Passagiere eines Luftfahrzeugs, wobei den Passagieren während einer Sinkflugphase des Luftfahrzeugs zwischen einer Reiseflughöhe und einer Kursänderungshöhe eine erste Fraktion von mit Sauerstoff angereicherter Luft aus einer unabhängigen Sauerstoffquelle auf einem ersten Druck zugeführt wird und in einem bordeigenen Abscheider eine zweite Fraktion von mit Sauerstoff angereicherter Luft mit einem Anteil zwischen 60 und 95% und auf einem zweiten Druck erzeugt wird, die den Passagieren zumindest in einer im Wesentlichen stabilisierten Flugphase des Luftfahrzeugs in der Nähe der Kursänderungshöhe zugeführt wird, wobei während der Sinkflugphase nur die erste Fraktion von angereicherter Luft und während der im Wesentlichen stabilisierten Flugphase nur die zweite Fraktion von angereicherter Luft zugeführt wird.

2. Verfahren nach Anspruch 1, **dadurch gekennzeichnet, dass** der zweite Druck unter dem ersten Druck liegt.

3. Verfahren nach Anspruch 1 oder 2, **dadurch gekennzeichnet, dass** die Kursänderungshöhe über 5500 Meter liegt.

4. Verfahren nach einem der Ansprüche 1 bis 3, **dadurch gekennzeichnet, dass** die Kursänderungshöhe zwischen 6000 und 8000 Meter liegt.

5. Verfahren nach einem der Ansprüche 1 bis 4, **dadurch gekennzeichnet, dass** der zweite Druck zwischen 1,5 und 2,5 bar relativ liegt.

6. Verfahren nach Anspruch 5, **dadurch gekennzeichnet, dass d**ie zweite Fraktion von angereicherter Luft in einem Molekularsieb-Konzentrator (2) erzeugt wird.

7. Verfahren nach einem der Ansprüche 1 bis 6, **dadurch gekennzeichnet, dass** der erste Druck über 110 bar relativ liegt.

8. Verfahren nach einem der vorhergehenden Ansprüche, **dadurch gekennzeichnet, dass** den Passagieren in der Flugphase auf Kursänderungshöhe im Wesentlichen nicht mehr die erste Fraktion von angereicherter Luft zugeführt wird.

9. Verfahren nach einem der Ansprüche 1 bis 8, dabei eine Anlage zur Abgabe von mit Sauerstoff angereicherter Luft an die Passagiere eines Luftfahrzeugs verwendet wird, die eine unabhängige Quelle (18) einer ersten Fraktion von mit Sauerstoff angereicherter Luft auf einem ersten Druck, bordeigene Mittel (2) zur Erzeugung einer zweiten Fraktion von mit Sauerstoff angereicherter Luft auf einem zweiten Druck, Zufuhrmittel (20, 22, 23) für die erste und die zweite Fraktion von mit Sauerstoff angereicherter Luft an die Passagiere und Mittel (14) zur sequentiellen Abgabe von jeweiligen Durchsätzen der ersten und der zweiten Fraktion von mit Sauerstoff angereicherter Luft an die Zufuhrmittel (20, 22, 23) umfasst, wobei diese Abgabemittel einen mit der unabhängigen Quelle (18) verbundenen ersten Einlass, einen mit den Erzeugungsmitteln (2) verbundenen zweiten Einlass, einen mit den Zufuhrmitteln (20 - 23) verbundenen Auslass und ein Dreiwegeventil (14) umfassen, wobei die Anlage auf Druck reagierende Mittel (26) zur Steuerung der Abgabemittel (14) umfasst, wobei die Steuermittel einen Höhensensor (26) und/oder einen Drucksensor aufweisen, die mit einem Betätigungsmittel zusammenwirken, das dazu konfiguriert ist, das Ventil (14) dahingehend anzusteuern, zunächst nur die erste Fraktion von angereicherter Luft während einer Sinkflugphase zwischen einer Reiseflughöhe und einer Kursänderungshöhe zu liefern, dann nur die zweite Fraktion von angereicherter Luft während einer im Wesentlichen stabilisierten Flugphase in der Nähe der Kursänderungshöhe zu liefern.

10. Verfahren nach Anspruch 9, **dadurch gekennzeichnet, dass** die Anlage einen Druckminderer zwischen der unabhängigen Quelle (18) und den Abgabemitteln (14) umfasst.

11. Verfahren nach einem der Ansprüche 9 bis 10, **dadurch gekennzeichnet, dass** die Erzeugungsmittel einen Molekularsieb-Konzentrator (2) umfassen.

12. Verfahren nach einem der Ansprüche 9 bis 11, **dadurch gekennzeichnet, dass** die unabhängige Quelle Drucksauerstoffflaschen (18) umfasst.

13. Verfahren nach einem der Ansprüche 9 bis 12, **dadurch gekennzeichnet, dass** die Anlage einen Druckregler (24) zwischen den Abgabemitteln (14) und den Zufuhrmitteln (20, 23) umfasst.
